(19) Europäisches Patentamt / European Patent Office / Office européen des brevets

(11) **EP 4 129 475 A1**

(12) **EUROPEAN PATENT APPLICATION**
published in accordance with Art. 153(4) EPC

(43) Date of publication:
**08.02.2023 Bulletin 2023/06**

(21) Application number: **21776311.9**

(22) Date of filing: **10.02.2021**

(51) International Patent Classification (IPC):
**B01J 29/76** (1995.01) **B01D 53/94** (1995.01)
**B01J 29/46** (1995.01) **F01N 3/08** (1968.09)
**F01N 3/10** (1968.09) **F01N 3/28** (1980.01)

(52) Cooperative Patent Classification (CPC):
**B01D 53/94; B01J 29/46; B01J 29/76; F01N 3/08;
F01N 3/10; F01N 3/28;** Y02T 10/12

(86) International application number:
**PCT/JP2021/005050**

(87) International publication number:
**WO 2021/192693 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2020 JP 2020056612**

(71) Applicant: **CATALER CORPORATION
Kakegawa-shi, Shizuoka 437-1492 (JP)**

(72) Inventors:
• **NANJO, Tsubasa
Kakegawa-shi, Shizuoka 437-1492 (JP)**

• **KAWANO, Yuya
Kakegawa-shi, Shizuoka 437-1492 (JP)**
• **ARAKAWA, Takuto
Kakegawa-shi, Shizuoka 437-1492 (JP)**
• **YAMASHITA, Yoshinori
Kakegawa-shi, Shizuoka 437-1492 (JP)**
• **OHISHI, Shunsuke
Kakegawa-shi, Shizuoka 437-1492 (JP)**
• **TAKASU, Ryosuke
Kakegawa-shi, Shizuoka 437-1492 (JP)**

(74) Representative: **Ricker, Mathias
Wallinger Ricker Schlotter Tostmann
Patent- und Rechtsanwälte Partnerschaft mbB
Zweibrückenstrasse 5-7
80331 München (DE)**

(54) **EXHAUST GAS PURIFICATION CATALYST DEVICE**

(57) An exhaust gas purification catalyst device 101 including a substrate 10 and an SCR catalyst layer 20 on the substrate 10, the substrate 10 containing catalyst precious metal particles 11 directly supported on the substrate 10, the catalyst precious metal particles 11 containing Pt, and the catalyst precious metal particles 11 having an average particle diameter of 30 to 120 nm inclusive.

FIG. 1

EP 4 129 475 A1

**Description**

FIELD

The present invention relates to an exhaust gas purification catalytic device.

BACKGROUND

Selective catalytic reduction (SCR) systems are known as a technique for reducing and purifying NOx in an exhaust gas emitted from a diesel engine before the exhaust gas is released into the atmosphere. The SCR system is a technology which uses a reductant, for example, ammonia, to reduce $NO_x$ in an exhaust gas to $N_2$.

In an SCR system, a reductant may be excessively used to improve the reductive purification rate of $NO_x$. In this case, a non-reacted reductant not used in the reduction of $NO_x$ is emitted from an SCR catalyst. When ammonia is used as the reductant, the emission of ammonia from an SCR catalyst is referred to as "ammonia slip".

It is desirable that the slipped ammonia be oxidatively purified with an ASC (ammonia slip catalyst) and then released into the atmosphere. Accordingly, an ASC is often used in combination with an SCR system, for example, in a state of being laminated with an SCR layer or arranged downstream from an SCR layer.

PTL 1 discloses a bifunctional catalyst for selective ammonia oxidation, comprising platinum (Pt), a second metal, a refractory metal oxide, and a zeolite. PTL 1 describes a general configuration of an ASC.

PTL 2 discloses a bimetallic catalyst for selective ammonia oxidation, comprising a molecular sieve having a silica-to-alumina ratio (SAR) of less than 30, wherein the molecular sieve comprises ion-exchanged copper (Cu) and ion-exchanged platinum (Pt).

PTL 3 discloses a method for measuring an average particle size of noble metal catalyst particles supported on a carrier by a CO pulse method. In the technique of PTL 3, even when the carrier comprises a material exhibiting OSC (oxygen storage capacity), the CO pulse is not consumed by the carrier and substantially all of the CO is adsorbed on the noble metal catalyst particles. PTL 3 describes that the state of noble metal catalyst particles can be accurately evaluated according to the method disclosed therein.

[CITATION LIST]

[PATENT LITERATURE]

[PTL 1] Japanese Unexamined PCT Publication (Kohyo) No. 2010-519039
[PTL 2] Japanese Unexamined PCT Publication (Kohyo) No. 2012-507400
[PTL 3] Japanese Unexamined Patent Publication (Kokai) No. 2005-283129

SUMMARY

[TECHNICAL PROBLEM]

$N_2O$ is generated as a side reaction product of the oxidative purification of $NH_3$ in ASCs. Since $N_2O$ is a greenhouse gas which has an effect on global warming, the emissions thereof should be suppressed.

In an SCR system comprising an ASC, it is difficult to purify generated $N_2O$ by SCR. Therefore, it is desirable that the amount of $N_2O$ generated in the ASC be as small as possible.

In view of the above circumstances, an object of the present invention is to provide an exhaust gas purification catalytic device that has a sufficiently high $NH_3$ oxidative purification efficiency and generates a small amount of $N_2O$.

[SOLUTION TO PROBLEM]

The present invention for achieving the above object is described as follows.

«Aspect 1» An exhaust gas purification catalytic device, comprising a substrate and an SCR catalyst layer on the substrate, wherein

the substrate comprises catalytic noble metal particles supported directly on the substrate,

the catalytic noble metal particles comprise Pt, and
the catalytic noble metal particles have an average particle size of 30 nm or more and 120 nm or less.

«Aspect 2» The exhaust gas purification catalytic device according to Aspect 1, wherein a noble metal other than Pt in the catalytic noble metal particles has a content ratio of 10% by mass or less with respect to a total mass of the catalytic noble metal particles.

«Aspect 3» The exhaust gas purification catalytic device according to Aspect 1 or 2, wherein the catalytic noble metal particles have an average particle size of more than 50 nm and 100 nm or less.

«Aspect 4» The exhaust gas purification catalytic device according to any one of Aspects 1 to 3, wherein the SCR catalyst layer comprises a zeolite doped with Cu or Fe.

«Aspect 5» The exhaust gas purification catalytic device according to any one of Aspects 1 to 4, wherein the SCR catalyst layer comprises at least one selected from Cu-CHA type zeolite, Cu-BEA type zeolite, Fe-MFI type zeolite, and Fe-BEA type zeolite.

«Aspect 6» The exhaust gas purification catalytic device according to any one of Aspects 1 to 5, wherein the catalytic noble metal particles further comprise Pd.

«Aspect 7» The exhaust gas purification catalytic device according to any one of Aspects 1 to 6, wherein the exhaust gas purification catalytic device is substantially free of any noble metal other than the catalytic noble metal particles supported directly on the substrate.

«Aspect 8» The exhaust gas purification catalytic device according to any one of Aspects 1 to 7, further including an OSC layer comprising ceria.

«Aspect 9» The exhaust gas purification catalytic device according to Aspect 8, wherein the ceria is contained in the OSC layer in a ceria-zirconia composite oxide form.

«Aspect 10» The exhaust gas purification catalytic device according to Aspect 8 or 9, wherein the OSC layer is included between the substrate and the SCR catalyst layer.

[ADVANTAGEOUS EFFECTS OF INVENTION]

According to the present invention, an exhaust gas purification catalytic device that has a sufficiently high $NH_3$ oxidative purification efficiency and generates a small amount of $N_2O$ is provided.

BRIEF DESCRIPTION OF DRAWINGS

FIG. 1 is a schematic cross-sectional view showing an example of a configuration of the exhaust gas purification catalytic device of the present invention.
FIG. 2 is a schematic cross-section view showing another example of a configuration of the exhaust gas purification catalytic device of the present invention.

DESCRIPTION OF EMBODIMENTS

«Exhaust gas purification catalytic device»

The exhaust gas purification device of the present invention is

an exhaust gas purification catalytic device comprising a substrate and an SCR catalyst layer on the substrate, wherein
the substrate comprises catalytic noble metal particles supported directly on the substrate,
the catalytic noble metal particles comprise Pt, and
the catalytic noble metal particles have an average particle size of 30 nm or more and 120 nm or less.

In the exhaust gas purification device of the present invention, NOx is purified by selective catalytic reduction using ammonia as a reductant via the SCR catalyst layer on the substrate. At this time, the excess ammonia which was excessively supplied and not used for the selective catalytic reduction of NOx is oxidatively purified by the catalytic noble metal particles supported directly on the substrate.

The exhaust gas purification device of the present invention may further include, in addition to the above substrate and SCR catalyst layer, an OSC layer (oxygen storage) comprising ceria.

The OSC layer exhibits an oxygen storage and release capacity and has a function of oxygen storage in a lean atmosphere and oxygen release in a rich atmosphere. Therefore, the $NH_3$ oxidative purification activity of the catalytic noble metal particles supported directly on the substrate is enhanced, and the oxidative purification ability of $NH_3$, particularly in a low-temperature region, is further improved. Therefore, the OSC layer is preferably arranged in a location close to the catalytic noble metal particles, and may be present, for example, between the substrate and the SCR catalyst layer.

In conventionally known ASCs, Pt, which functions as an oxidation catalyst for $NH_3$, is present in a catalytic coating layer on the substrate, in a state of being supported on inorganic oxide carrier particles having a large area. In this case, Pt, as fine particles having a relatively small particle size, is supported on the carrier particles.

However, the present inventors have discovered that there is a limit in the suppression of the amount of $N_2O$ generated regarding ASCs having a configuration which includes a catalytic coating layer comprising Pt particles having a relatively small particle size and supported on a carrier having a large area.

In the present invention, Pt is supported directly on the substrate to form particles having a relatively large particle size, whereby an exhaust gas purification catalytic device that has an excellent oxidative purification efficiency of $NH_3$ and generates a small amount of $N_2O$ is obtained.

Hereinafter, a typical configuration of the exhaust gas purification catalytic device of the present invention will be described with reference to the drawings.

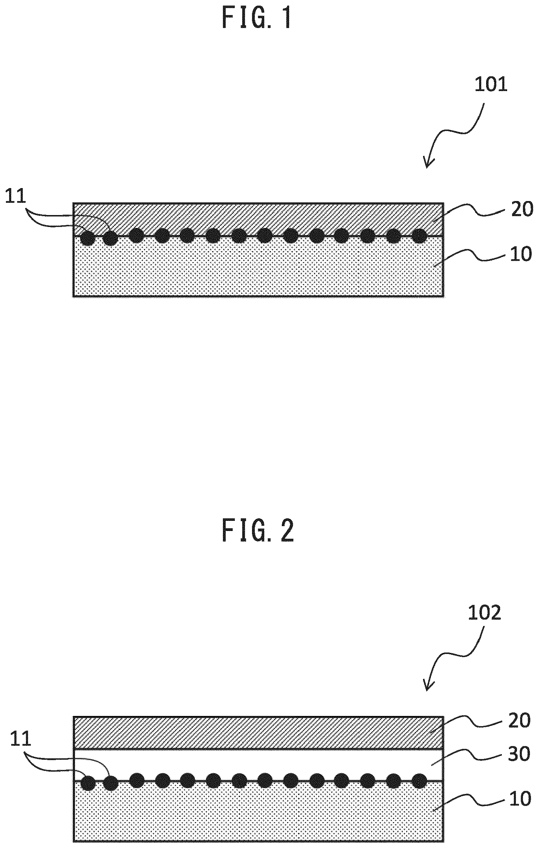

Examples of a configuration of the exhaust gas purification catalytic device of the present invention are shown in FIGS. 1 and 2.

The exhaust gas purification catalytic device (101) in FIG. 1 comprises a substrate (10) and an SCR catalyst layer (20) on the substrate (10). The substrate (10) of this exhaust gas purification catalytic device (101) comprises catalytic noble metal particles (11) supported directly on the substrate (10).

Like the exhaust gas purification catalytic device (101) in FIG. 1, the exhaust gas purification catalytic device (102) in FIG. 2 comprises a substrate (10) and an SCR catalyst layer (20) on the substrate (10), wherein the substrate (10) comprises catalytic noble metal particles (11) supported directly on the substrate (10). However, this exhaust gas purification catalytic device (102) includes an OSC layer (30) between the substrate (10) and the SCR catalyst layer (20).

In the exhaust gas purification catalytic device (101) in FIG. 1 and the exhaust gas purification catalytic device (102) in FIG. 2, the catalytic noble metal particles (11) comprise Pt. The average particle size of these catalytic noble metal particles (11) is 30 nm or more and 120 nm or less.

The OSC layer (30) of the exhaust gas purification catalytic device (102) in FIG. 2 comprises ceria. The ceria in the OSC layer (30) may be contained in the OSC layer (30), for example, in a ceria-zirconia composite oxide form.

Hereinafter, each component of the exhaust gas purification device of the present invention will be described in order.

<Substrate>

As the substrate of the exhaust gas purification catalytic device of the present invention, a substrate generally used for exhaust gas purification catalytic devices can be used. The substrate may be, for example, a straight-flow monolithic honeycomb substrate composed of a material such as cordierite, SiC, stainless steel, or inorganic oxide particles.

The substrate of the exhaust gas purification catalytic device of the present invention comprises catalytic noble metal particles supported directly on a substrate. The phrase "supported directly on a substrate" means that the catalytic noble metal particles are attached to the substrate not via an inorganic oxide carrier other than the inorganic oxide constituting the substrate.

(Catalytic noble metal particles)

The catalytic noble metal particles comprise Pt.

The catalytic noble metal particles may comprise a noble metal other than Pt. The noble metal other than Pt contained in the catalytic noble metal particles may be, for example, a platinum group element other than Pt; may be, for example, one or more selected from Ru, Rh, Pd, Os, and Ir; or may be one or more selected from Rh and Pd, particularly Pd.

While it is easy to control the particle size of catalytic noble metal particles comprising Pt and a noble metal other than Pt, there may be a problem that the amount of $N_2O$ generated is large for catalytic noble metal particles having an excessively large content of a noble metal other than Pt. From this viewpoint, the content ratio of the noble metal other than Pt of the catalytic noble metal particles may be 20% by mass or less, 18% by mass or less, 15% by mass or less, 12% by mass or less, 10% by mass or less, 8% by mass or less, 5% by mass or less, 3% by mass or less, or 0% by mass, and may be greater than 0% by mass, 1% by mass or greater, 3% by mass or greater, 5% by mass or greater, 8% by mass or greater, or 10% by mass or greater with respect to the total mass of the catalytic noble metal particles.

The average particle size of the catalytic noble metal particles is 30 nm or more and 120 nm or less. When the average particle size of the catalytic noble metal particles is less than 30 nm, the amount of $N_2O$ generated sometimes increases. On the other hand, when the particle size of the catalytic noble metal particles is more than 120 nm, the oxidative purification ability of $NH_3$ may be impaired. The average particle size of the catalytic noble metal particles, from the viewpoint of suppressing generation of $N_2O$, may be, for example, 35 nm or more, 40 nm or more, 45 nm or more, 50 nm or more, more than 50 nm, 55 nm or more, 60 nm or more, or 65 nm or more, and from the viewpoint of improving the oxidative purification ability of $NH_3$, may be 110 nm or less, 100 nm or less, 90 nm or less, 80 nm or less, 75 nm or less, 70 nm or less, or 65 nm or less. Typically, the particle size of the catalytic noble metal particles may be, for example, more than 50 nm and 100 nm or less.

As used herein, the average particle size of the catalytic noble metal particles is a value measured by a carbon monoxide (CO) pulse method. The particle size of the catalytic noble metal particles are measured in accordance with the method described in PTL 3 (Japanese Unexamined Patent Publication (Kokai) No. 2005-283129).

Specifically, an exhaust gas purification catalytic device is pulverized into small pieces of, for example, 0.5 mm or less as measurement samples, subjected to oxidation and reduction treatments, then treated with carbon dioxide ($CO_2$), and thereafter used for measurement by a CO pulse method. The oxidation and reduction treatments may be carried out at an appropriately high temperature, for example, 400 °C. The $CO_2$ treatment may be carried out at a relatively low temperature, for example, 50 °C. The measurement by a CO pulse method may be carried out at a relatively low temperature, for example, 50 °C.

In this method, it is important that the $CO_2$ treatment of the measurement samples be carried out prior to the measurement by a CO pulse method. When the exhaust gas purification catalytic device comprises an OSC material, adsorption sites of the OSC material are blocked by $CO_2$ due to the $CO_2$ treatment. Thus, when a CO pulse method is carried out after a $CO_2$ treatment, it is considered that substantially all of the CO supplied to the samples is adsorbed on the noble metal catalyst particles without being adsorbed on and consumed by the OSC material.

Therefore, the difference between the amount of CO supplied to the samples by the CO pulse method and the amount of CO contained in the exhaust gas can be estimated as the amount of CO adsorbed on the catalytic noble metal particles.

Assuming that one CO is adsorbed for one catalytic noble metal atom exposed on the surface of a catalytic noble metal particle, the average particle size of the catalytic noble metal particles can be calculated.

The average particle size of the catalytic noble metal particles may be calculated from the amount of CO adsorbed, for example, as follows.

A surface area Am(Metal) ($m^2/g$) per g of catalytic noble metal particles is represented by the following mathematical formula (1), wherein $V_{chem}$ ($cm^3$) is the CO adsorption amount, $\rho_m$ ($nm^2$) is the noble metal cross-sectional area per catalytic noble metal atom, and c (g) is the mass of catalytic noble metal particles per g of measurement sample. SF in the formula (1) is referred to as a "stoichiometry factor", and is a number indicating the number of CO adsorbed for one catalytic noble metal atom. It is assumed herein that SF = 1, as described above.

[Math. 1]

$$Am(Metal) = \frac{V_{Chem} \times SF / 22414 \times 6.02 \times 10^{23} \times \sigma_m \times 10^{-18}}{c} \qquad (1)$$

The surface area Am(Metal) ($m^2/g$) per g of catalytic noble metal particles obtained in the formula (1) can be rewritten as the following mathematical formula (2), using the average radius r (cm) of the catalytic noble metal particles, the number $\alpha$ of catalytic noble metal particles per g of catalytic noble metal particles, and the mass c (g) of the catalytic noble metal particles.

[Math. 2]

$$\frac{4\pi r^2 \times \alpha}{c} = Am(Metal) \qquad (2)$$

The volume ($cm^3$) per g of catalytic noble metal particles is represented by the following mathematical formula (3), using the average radius r (cm) of the catalytic noble metal particles, the number $\alpha$ of catalytic noble metal particles per g of catalytic noble metal particles, the mass c (g) of the catalytic noble metal particles, and the density $\rho$ ($g/cm^3$) of the catalytic noble metal.

[Math. 3]

$$\frac{4/3\pi r^3 \times \alpha}{c} = 1/(\rho \times 10^6) \qquad (3)$$

From mathematical formulas (2) and (3), an average radius r (cm) of the catalytic noble metal particles can be calculated by the following mathematical formula (4).

[Math. 4]

$$r = 3/(Am(Metal) \times \rho \times 10^6) \qquad (4)$$

An average particle size d (nm) of the catalytic noble metal particles can be obtained by the following mathematical formula (5).

[Math. 5]

$$d = 2r \times 10^9 \qquad (5)$$

In the exhaust gas purification catalytic device of the present invention, the supported amount of catalytic noble metal particles supported directly on the substrate is arbitrary. However, the mass of the catalytic noble metal particles per L of substrate, from the viewpoint of ensuring a sufficiently high $NH_3$ oxidative purification ability, may be, for example, 0.01 g/L or more, 0.03 g/L or more, 0.05 g/L or more, 0.08 g/L or more, or 0.10 g/L or more, and from the viewpoint of setting a proper balance between the $NH_3$ oxidative purification ability and the production cost of the catalytic device, may be, for example, 2.00 g/L or less, 1.50 g/L or less, 1.00 g/L or less, 0.80 g/L or less, 0.50 g/L or less, 0.30 g/L or less, or 0.10 g/L or less.

It is preferable that the exhaust gas purification catalytic device of the present invention be substantially free of any noble metal other than the catalytic noble metal particles supported directly on the substrate. The phrase "the exhaust gas purification catalytic device is substantially free of any noble metal other than the catalytic noble metal particles supported directly on the substrate" means that, of the total mass of noble metals contained in the exhaust gas purification catalytic device, the mass of noble metal other than the catalytic noble metal particles supported directly on the substrate accounts for a ratio of 5% by mass or less, 3% by mass or less, 1% by mass or less, 0.5% by mass or less, 0.3% by mass or less, or 0.1% by mass or less, or the exhaust gas purification catalytic device does not comprise at all any noble metal other than the catalytic noble metal particles supported directly on the substrate.

<SCR catalyst layer>

The exhaust gas purification catalytic device of the present invention includes an SCR catalyst layer on the substrate comprising catalytic noble metal particles supported directly thereon. This SCR catalyst layer comprises a zeolite doped with Cu or Fe. The SCR catalyst layer may further comprise, for example, an optional component such as an inorganic oxide other than a zeolite doped with Cu or Fe or a binder.

(Zeolite doped with Cu or Fe)

In the SCR catalyst layer, a zeolite doped with Cu or Fe functions as a catalyst for selective reduction of NOx by $NH_3$.

The crystal structure of the zeolite of the SCR catalyst layer is arbitrary. The crystal structure of a proton zeolite applicable to the present invention, listed with the respective structural code (described in parentheses), may be, for example, A type (LTA), ferrierite (FER), MCM-22 (MWW), ZSM-5 (MFI), mordenite (MOR), L type (LTL), X or Y type (FAU), beta type (BEA), chabazite (CHA), CDO type, or GON type.

Herein, "Cu-" or "Fe-" is added in front of the structural code of the parent zeolite to reference a zeolite doped with Cu or Fe. For example, a chabazite-type parent zeolite doped with Cu is written as "Cu-CHA type zeolite".

The SCR catalyst layer of the present invention may comprise at least one selected from Cu-CHA type zeolite, Cu-BEA type zeolite, Fe-MFI type zeolite, and Fe-BEA type zeolite.

The doping amount of Cu or Fe with respect to the zeolite, from the viewpoint of ensuring sufficiently high NOx reductive purification activity, may be, for example, 0.5% by mass or greater, 1.0% by mass or greater, 1.5% by mass or greater, 2.0% by mass or greater, 2.5% by mass or greater, or 3.0% by mass or greater independently for each of Cu and Fe, based on the total mass of the zeolite doped with Cu or Fe.

The upper limit of the doping amount of Cu or Fe with respect to the zeolite is not limited from the viewpoint of enhancing NOx reductive purification activity. However, the NOx reductive purification activity does not increase indefinitely if the doping amount is excessively increased. Therefore, from the viewpoint of maintaining proper production cost of the exhaust gas purification catalytic device, the doping amount of Cu or Fe with respect to the zeolite may be, for example, 20% by mass or less, 15% by mass or less, 12% by mass or less, 10% by mass or less, 8% by mass or less, or 6% by mass or less independently for each of Cu and Fe, based on the total mass of the zeolite doped with Cu or Fe.

The amount of zeolite doped with Cu or Fe as the mass of the zeolite per L of substrate, from the viewpoint of ensuring sufficiently high NOx-selective reductive purification ability, may be, for example, 30 g/L or more, 40 g/L or more, 50 g/L or more, 60 g/L or more, 70 g/L or more, or 80 g/L or more, and from the viewpoint of reducing pressure loss of the catalytic device, may be, for example, 200 g/L or less, 150 g/L or less, 120 g/L or less, 110 g/L or less, 100 g/L or less, or 90 g/L or less.

(Inorganic oxide other than zeolite doped with Cu or Fe)

The SCR catalyst layer may further comprise an inorganic composite oxide other than the zeolite doped with Cu or Fe. The inorganic oxide particles contained in the SCR catalyst layer may be, for example, particles of an oxide having one or more elements selected from aluminum, silicon, titanium, zirconium, and rare earth elements. Examples of the inorganic oxide particles specifically include alumina particles, ceria particles, and ceria-zirconia composite oxide particles.

(Binder)

The SCR catalyst layer may further comprise a binder. Examples of the binder include alumina sol, zirconia sol, silica sol, and titania sol.

<OSC layer>

The exhaust gas purification catalytic device of the present invention may further include an OSC layer comprising ceria.

(Ceria)

The OSC layer comprises ceria.

The amount of ceria in the OSC layer as the amount of ceria per L of substrate, from the viewpoint of ensuring sufficiently high OSC ability, may be, for example, 1 g/L or more, 3 g/L or more, 5 g/L or more, or 7 g/L or more. From the viewpoint of reducing pressure loss of the catalytic device, the amount of ceria per L of substrate may be, for example, 50 g/L or less, 40 g/L or less, 30 g/L or less, 20 g/L or less, 15 g/L or less, or 10 g/L or less.

The ceria in the OSC layer may be in a pure ceria form, may be contained in the OSC layer in a ceria-zirconia composite oxide form, or may be a mixture thereof. The ceria content in a ceria-zirconia composite oxide contained in the OSC layer may be, for example, 5% by mass or greater, 10% by mass or greater, 20% by mass or greater, 30% by mass or greater, 40% by mass or greater, 50% by mass or greater, 60% by mass or greater, 70% by mass or greater, 80% by mass or greater, or 90% by mass or greater.

As described above, the OSC layer exhibits oxygen storage and release capacity and has a function of improving the $NH_3$ oxidative purification activity of the catalytic noble metal particles supported directly on the substrate. Therefore, the OSC layer is preferably arranged in a location close to the catalytic noble metal particles, and may be present, for example, between the substrate and the SCR catalyst layer.

(Optional component)

The OSC layer may comprise optional components in addition to ceria and a ceria-zirconia composite oxide. An optional component in the OSC layer may be, for example, an inorganic oxide other than ceria and the ceria-zirconia composite oxide or a binder.

The inorganic oxide particles other than ceria and a ceria-zirconia composite oxide contained in the OSC layer may be, for example, particles of an oxide having one or more elements selected from aluminum, silicon, titanium, zirconium, and rare earth elements (excluding cerium). Examples of the inorganic oxide particles specifically include alumina particles and zirconia particles.

Examples of the binder contained in the OSC layer include alumina sol, zirconia sol, silica sol, and titania sol.

<<Method for producing exhaust gas purification catalytic device>>

The exhaust gas purification catalytic device of the present invention may be produced by any method as long as the catalytic device has the above configuration.

However, the exhaust gas purification catalytic device of the present invention may be produced by a method for producing the exhaust gas purification catalytic device of the present invention, comprising, for example, the following:

supporting catalytic noble metal particles directly on a substrate (catalytic noble metal particles supporting step), and forming an SCR catalyst layer on the substrate where the catalytic noble metal particles are supported directly thereon (SCR layer formation step).

The method for producing the exhaust gas purification catalytic device of the present invention may further comprise, for example, after the catalytic noble metal particles supporting step and before the SCR catalyst layer formation step,

forming an OSC layer (OSC layer formation step).

(Catalytic noble metal particles supporting step)

In the present step, catalytic noble metal particles are supported directly on the substrate.

The substrate may be selected appropriately as the substrate of the desired exhaust gas purification catalytic device. The substrate may be, for example, a straight-flow monolithic honeycomb substrate made of cordierite.

This substrate is coated with a coating liquid containing a catalytic noble metal precursor and baked, whereby catalytic noble metal particles are supported directly on the substrate. The coating layer may be dried, as needed, after coating and before baking.

The catalytic noble metal precursor in the coating liquid may be, for example, a nitrate, a sulfate, a halide, or a complex compound of a desired catalytic noble metal. The complex compound may be, for example, a complex compound comprising a tetraammine complex ion.

The solvent of the coating liquid may be water, an aqueous organic solvent, or a mixture thereof, and is typically water.

The coating of the coating liquid and the drying and baking after the coating may each be carried out according to any publicly known method.

(SCR catalyst layer formation step)

In the present step, an SCR catalyst layer is formed on the substrate where catalytic noble metal particles are supported directly thereon.

The present step may be carried out by coating the substrate where catalytic noble metal particles are supported directly thereon with a slurry containing, for example, a zeolite doped with Cu or Fe and an additionally optional component, as needed, followed by baking. The coating layer may be dried, as needed, after coating and before baking.

The dispersion medium of the slurry may be water, an aqueous organic solvent, or a mixture thereof, and is typically water.

The coating of the slurry and the drying and baking after the coating may each be carried out according to any publicly known method.

(OSC layer formation step)

The present step is a step of forming an OSC layer. This OSC layer formation step may be carried out, for example, after the catalytic noble metal particles supporting step and before the SCR catalyst layer formation step.

Except that the included components are appropriately changed according to the desired OSC layer, the present step may be carried out in the same manner as the SCR catalyst layer formation step.

EXAMPLES

<<Preparation of slurry for forming catalytic coating layer>>

(1) Preparation of Pt-containing solution

(1-1) Pt-containing solution A1

400 g of pure water and an organic polysaccharide were added to and mixed in a tetraammineplatinum(II) dichloride aqueous solution (0.2 g in terms of Pt metal) by stirring for 3 h to obtain a Pt-containing solution A1.

(1-2) Pt-Pd-containing solution A2

A tetraamminepaladium(II) dichloride aqueous solution (0.02 g in terms of Pd metal) was further added to and dissolved in the Pt-containing solution A1 to obtain a Pt-Pd-containing solution A2.

(1-3) Pt-Pd-containing solution A3

A tetraamminepaladium(II) dichloride aqueous solution (0.01 g in terms of Pd metal) was further added to and dissolved in the Pt-containing solution A1 to obtain a Pt-Pd-containing solution A3.

(2) Preparation of zeolite-containing slurry

(2-1) Zeolite-containing slurry B1

85 g of Cu-CHA type zeolite (Cu doping amount of 5% by mass, SAR8) and 15 g of a silica binder sol were dispersed in 200 g of pure water to obtain a zeolite-containing slurry B1.

(2-2) Zeolite-containing slurry B2

Except that 85 g of Cu-BEA type zeolite (Cu doping amount of 5.9% by mass, SAR25) was used in place of the Cu-CHA type zeolite, the same operation as in the preparation of the zeolite-containing slurry B1 was carried out to obtain a zeolite-containing slurry B2.

(2-3) Zeolite-containing slurry B3

Except that 85 g of Fe-MFI type zeolite (Fe doping amount of 2.0% by mass, SAR30) was used in place of the Cu-CHA type zeolite, the same operation as in the preparation of the zeolite-containing slurry B1 was carried out to obtain a zeolite-containing slurry B3.

(2-4) Zeolite-containing slurry B4

Except that 85 g of Fe-BEA type zeolite (Fe doping amount of 5.0% by mass, SAR25) was used in place of the Cu-CHA type zeolite, the same operation as in the preparation of the zeolite-containing slurry B1 was carried out to obtain a zeolite-containing slurry B4.

(3) CZ-containing slurry

A ceria-zirconia composite oxide (ceria content of 56.5% by mass) (CZ) was dispersed in 15 g of water to obtain a CZ-containing slurry.

(4) Pt/Al$_2$O$_3$-containing slurry

A tetraammineplatinum(II) dichloride aqueous solution (0.1 g in terms of Pt metal) was dissolved in 45 g of pure water to form an aqueous solution. 15 g of alumina was added to this aqueous solution and stirred for 1 h. Subsequently, the mixture was heated to 120 ° C for 5 h, and after the water was evaporated, baked at 500 °C for 1 h to obtain a Pt/Al$_2$O$_3$ powder. The obtained Pt/Al$_2$O$_3$ powder was allowed to disperse in pure water, whereby a Pt/Al$_2$O$_3$-containing slurry was prepared.

«Example 1»

(1) Production of exhaust gas purification catalytic device

A straight-flow honeycomb substrate made of cordierite (capacity of about 1 L) was coated with the Pt-containing solution A1 over the entire length of the honeycomb substrate and baked at 500 °C for 1 h to have catalytic noble metal particles consisting of Pt supported directly on the honeycomb substrate.
Subsequently, a honeycomb substrate where catalytic noble metal particles are supported directly thereon was coated with the zeolite-containing slurry B1 over the entire length of the honeycomb substrate and baked at 500 °C for 1 h to form an SCR catalyst layer thereon, whereby an exhaust gas purification catalytic device of Example 1 was produced.

(2) Evaluation of exhaust gas purification catalytic device

(2-1) Measurement of average particle size of catalytic noble metal particles

The average particle size of the catalytic noble metal particles (Pt particles or Pt-Pd particles) was measured by a carbon monoxide (CO) pulse adsorption method.
Measurement samples obtained by pulverizing the exhaust gas purification catalytic device obtained above into small pieces of 0.5 mm or less were pretreated under the following conditions, and then gas chemical adsorption measurement was carried out by the CO pulse adsorption method to examine the amount of CO adsorbed. The average particle size of Pt was calculated from the calculated adsorption surface area of Pt, assuming that one CO was adsorbed on one Pt molecule, and the supported amount of Pt in the exhaust gas purification catalytic device.
The sample pretreatment conditions were as follows.

Step 1: Flow a He gas containing 10% by volume of oxygen ($O_2$) while elevating the temperature from room temperature to 400 °C at a temperature elevation rate of 40 °C/min.
Step 2: After reaching 400 °C, maintain the same temperature, and flow a He gas containing 10% by volume of oxygen ($O_2$) for 15 min.
Step 3: Maintain at 400 °C and flow helium (He) for 15 min.
Step 4: Maintain at 400 °C and flow a He gas containing 10% by volume of hydrogen ($H_2$) for 15 min.
Step 5: Maintain at 400 °C and flow He for 15 min.
Step 6: Flow He while lowering the temperature from 400 °C to 50 °C at a temperature drop rate of 35 °C/min.
Step 7: Maintain at 50 °C and flow a He gas containing 10% of carbon dioxide ($CO_2$) for 10 min.
Step 8: Maintain at 50 °C and flow He for 10 min.

The probe gas in the CO pulse adsorption method was a He gas containing 1% by volume of CO. The amount of CO adsorbed was calculated from thermal conductivity measurement with a TCD.

(2-2) Evaluation of exhaust gas purification ability

The obtained exhaust gas purification catalytic device was subjected to a hydrothermal endurance treatment by heating at 630 °C for 50 h while flowing air having a water concentration of 10% by volume.
A model gas containing $NH_3$ and $NO_x$ of known concentrations was introduced and flowed in the exhaust gas purification catalytic device after the hydrothermal endurance treatment to measure the concentrations of $NH_3$ and $NO_x$ in the exhaust gas. An $NH_3$ oxidation rate and $N_2O$ selectivity calculated by the following mathematical formulas were each determined.

$$NH_3 \text{ oxidation rate } (\%) = \{(NH_3 \text{ concentration in introduced gas} - NH_3 \text{ concentration in exhaust gas})/NH_3 \text{ concentration in introduced gas}\} \times 100$$

$$N_2O \text{ selectivity } (\%) = \{N_2O \text{ concentration in exhaust gas} \times 2/(NH_3 \text{ concentration in introduced gas} - NH_3 \text{ in exhaust gas})\} \times 100$$

The model gas introduction conditions were set as follows.

Model gas introduction temperature: 250 °C
Model gas composition: NO: 0 ppm, $NH_3$: 500 ppm, $O_2$: 10%, $H_2O$: 5%, and balance of $N_2$
Space velocity during model gas introduction: 60,000 $hr^{-1}$

$NH_3$ oxidation rate and $N_2O$ selectivity for the exhaust gas purification catalytic device of Example 1, measured under the above conditions, are shown in Table 1.

«Example 2»

Except that the Pt-Pd-containing solution A2 was used in place of the Pt-containing solution A1 to have Pt-Pd alloy particles (9.1% by mass of Pd) as catalytic noble metal particles supported directly on a honeycomb substrate, the same operation as in Example 1 was used to produce an exhaust gas purification catalytic device of Example 2, and the produced catalytic device was evaluated. The evaluation results are shown in Table 1.

«Example 3»

An exhaust gas purification catalytic device produced in the same manner as in Example 2 was further baked at 630 °C for 50 h, whereby an exhaust gas purification catalytic device of Example 3 was produced.
The obtained exhaust gas purification catalytic device was evaluated in the same manner as in Example 1. The evaluation results are shown in Table 1.

«Example 4»

Except that the Pt-Pd-containing solution A3 was used in place of the Pt-containing solution A1 to have Pt-Pd alloy particles (16.7% by mass of Pd) as catalytic noble metal particles supported directly on a honeycomb substrate, the same operation as in Example 1 was used to produce an exhaust gas purification catalytic device of Example 4, and the produced catalytic device was evaluated. The evaluation results are shown in Table 1.

«Examples 5 to 7»

Except that the respective zeolite-containing slurries B2 (Example 5), B3 (Example 6), and B4 (Example 7) are used in place of the zeolite-containing slurry B1, the same operation as in Example 1 was used to produce each exhaust gas purification catalytic device of Examples 5 to 7, and the produced catalytic devices were evaluated. The evaluation results are shown in Table 1.

«Example 8»

(1) Production of exhaust gas purification catalytic device

The same type of cordierite honeycomb substrate (capacity of about 1 L) as the one used in Example 1 was coated with the Pt-containing solution A1 over the entire length of the honeycomb substrate and baked at 500 °C for 1 h to have catalytic noble metal particles consisting of Pt supported directly on the honeycomb substrate. Subsequently, the CZ-containing slurry was coated on the honeycomb substrate having the catalytic noble metal particles supported directly thereon over the entire length of the honeycomb substrate and dried to form an OSC layer. Further, the OSC layer was coated thereon with the zeolite-containing slurry B1 over the entire length of the honeycomb substrate and baked at 500 °C for 1 h to form an SCR catalyst layer, whereby an exhaust gas purification catalytic device of Example 8 was produced.

(2) Evaluation of exhaust gas purification catalytic device

The obtained exhaust gas purification catalytic device was evaluated in the same manner as in Example 1. The evaluation results are shown in Table 1.

«Example 9»

Except that the Pt-Pd-containing solution A2 was used in place of the Pt-containing solution A1 to have Pt-Pd alloy particles (9.1% by mass of Pd) as catalytic noble metal particles supported directly on a honeycomb substrate, the same operation as in Example 8 was used to produce an exhaust gas purification catalytic device of Example 9, and the produced catalytic device was evaluated. The evaluation results are shown in Table 1.

<<Comparative Example 1>>

(1) Production of exhaust gas purification catalytic device

The same type of cordierite honeycomb substrate (capacity of about 1 L) as the one used in Example 1 was coated with a Pt/Al$_2$O$_3$-containing slurry in a range of 80% of the substrate length from a downstream end of an exhaust gas flow and baked at 500 °C for 1 h to form an NH$_3$ oxidation catalyst layer comprising Pt/Al$_2$O$_3$ on the honeycomb substrate.
Subsequently, a honeycomb substrate on which an NH$_3$ oxidative catalyst layer was formed was coated with the zeolite-containing slurry B1 over the entire length of the honeycomb substrate and baked at 500 °C for 1 h to form an SCR catalyst layer thereon, whereby an exhaust gas purification catalytic device of Comparative Example 1 was produced.

(2) Evaluation of exhaust gas purification catalytic device

The obtained exhaust gas purification catalytic device was evaluated in the same manner as in Example 1. The evaluation results are shown in Table 1.

<<Comparative Example 2>>

An exhaust gas purification catalytic device produced in the same manner as in Comparative Example 1 was further baked at 630 °C for 50 h, whereby an exhaust gas purification catalytic device of Comparative Example 2 was produced.
The obtained exhaust gas purification catalytic device was evaluated in the same manner as in Example 1. The evaluation results are shown in Table 1.

<<Comparative Example 3>>

An exhaust gas purification catalytic device produced in the same manner as in Example 1 was further baked at 630 °C for 50 h, whereby an exhaust gas purification catalytic device of Comparative Example 3 was produced.
The obtained exhaust gas purification catalytic device was evaluated in the same manner as in Example 1. The evaluation results are shown in Table 1.

[Table 1]

| | Catalytic noble metal particles supported directly on substrate | | | | | Presence of OSC layer | SCR catalyst layer | | | Evaluation results | |
|---|---|---|---|---|---|---|---|---|---|---|---|
| | Supported amount of noble metal | | | Carrier of noble metal particles | Average particle size of noble metal particles (nm) | | Zeolite | | Silicone binder (g/L) | NH$_3$ oxidation rate (%) | N$_2$O selectivity (%) |
| | Pt (g/L) | Pd (g/L) | Pd ratio in noble metal | | | | Type | Coating amount (g/L) | | | |
| Example 1 | 0.10 | 0.00 | 0.0 wt% | Substrate | 60 | No | Cu-CHA | 85 | 15 | 90 | 40 |
| Example 2 | 0.10 | 0.01 | 9.1 wt% | Substrate | 55 | No | Cu-CHA | 85 | 15 | 85 | 44 |
| Example 3 | 0.10 | 0.01 | 9.1 wt% | Substrate | 92 | No | Cu-CHA | 85 | 15 | 83 | 31 |
| Example 4 | 0.10 | 0.02 | 16.7 wt% | Substrate | 56 | No | Cu-CHA | 85 | 15 | 76 | 58 |
| Example 5 | 0.10 | 0.00 | 0.0 wt% | Substrate | 60 | No | Cu-BEA | 85 | 15 | 90 | 40 |
| Example 6 | 0.10 | 0.00 | 0.0 wt% | Substrate | 60 | No | Fe-MFI | 85 | 15 | 90 | 39 |
| Example 7 | 0.10 | 0.00 | 0.0 wt% | Substrate | 60 | No | Fe-BEA | 85 | 15 | 90 | 39 |
| Example 8 | 0.10 | 0.00 | 0.0 wt% | Substrate | 68 | Yes | Cu-CHA | 85 | 15 | 98 | 35 |
| Example 9 | 0.10 | 0.01 | 9.1 wt% | Substrate | 62 | Yes | Cu-CHA | 85 | 15 | 98 | 39 |
| Comparative Example 1 | 0.10 | 0.00 | 0.0 wt% | Al$_2$O$_3$ | 2 | No | Cu-CHA | 85 | 15 | 10 | 86 |
| Comparative Example 2 | 0.10 | 0.00 | 0.0 wt% | Al$_2$O$_3$ | 18 | No | Cu-CHA | 85 | 15 | 99 | 60 |
| Comparative Example 3 | 0.10 | 0.00 | 0.0 wt% | Substrate | 132 | No | Cu-CHA | 85 | 15 | 15 | 24 |

The following can be understood with reference to Table 1.

In the exhaust gas purification catalytic device of Comparative Example 3 in which the average particle size of the catalytic noble metal particles was large, the $NH_3$ oxidation rate was as low as 15%. On the other hand, in the exhaust gas purification catalytic devices of Comparative Examples 1 and 2 in which the average particle size of the catalytic noble metal particles was small, the $N_2O$ selectivity was as high as 86% (Comparative Example 1) or 60% (Comparative Example 2).

The exhaust gas purification catalytic devices of Examples 1 to 9 of the present invention, wherein the average particle size of the catalytic noble metal particles was 30 nm or more and 120 nm or less, were shown to have $NH_3$ oxidation rate as high as 83% or greater and $N_2O$ selectivity as low as 58% or less, and were excellent in both $NH_3$ oxidative purification ability and $N_2O$ slip characteristic. Of these Examples, Examples 1 to 3 and 5 to 9, in which the amount of Pd contained in the catalytic noble metal particles was 0.15 g/L or less, were shown to have $N_2O$ selectivity of 44% or less, which is a very low value.

In the exhaust gas purification catalytic device of the present invention, even when the zeolite contained in the SCR catalyst layer was changed to Cu-CHA type (Examples 1 to 4, 8, and 9), Cu-BEA type (Example 5), Fe-MFI type (Example 6), or Fe-MEA type (Example 7), both $NH_3$ oxidative purification ability and $N_2O$ slip characteristic were verified to be excellent.

As seen in the evaluation results of the exhaust gas purification catalytic device of Examples 8 and 9, when an OSC layer was arranged between the substrate and the SCR catalyst layer, it was verified that $NH_3$ oxidative purification ability and $N_2O$ slip characteristic were not impaired, and particularly, the $NH_3$ oxidative purification ability exhibited very high performance.

REFERENCE SIGNS LIST

| | |
|---|---|
| 10 | substrate |
| 11 | catalytic noble metal particles |
| 20 | SCR catalyst layer |
| 30 | OSC layer |
| 101, 102 | exhaust gas purification catalytic device |

**Claims**

1. An exhaust gas purification catalytic device, comprising a substrate and an SCR catalyst layer on the substrate, wherein

   the substrate comprises catalytic noble metal particles supported directly on the substrate,
   the catalytic noble metal particles comprise Pt, and
   the catalytic noble metal particles have an average particle size of 30 nm or more and 120 nm or less.

2. The exhaust gas purification catalytic device according to claim 1, wherein a noble metal other than Pt in the catalytic noble metal particles has a content ratio of 10% by mass or less with respect to a total mass of the catalytic noble metal particles.

3. The exhaust gas purification catalytic device according to claim 1 or 2, wherein the catalytic noble metal particles have an average particle size of more than 50 nm and 100 nm or less.

4. The exhaust gas purification catalytic device according to any one of claims 1 to 3, wherein the SCR catalyst layer comprises a zeolite doped with Cu or Fe.

5. The exhaust gas purification catalytic device according to any one of claims 1 to 4, wherein the SCR catalyst layer comprises at least one selected from Cu-CHA type zeolite, Cu-BEA type zeolite, Fe-MFI type zeolite, and Fe-BEA type zeolite.

6. The exhaust gas purification catalytic device according to any one of claims 1 to 5, wherein the catalytic noble metal particles further comprise Pd.

7. The exhaust gas purification catalytic device according to any one of claims 1 to 6, wherein the exhaust gas purification catalytic device is substantially free of any noble metal other than the catalytic noble metal particles supported directly on the substrate.

8. The exhaust gas purification catalytic device according to any one of claims 1 to 7, further including an OSC layer comprising ceria.

9. The exhaust gas purification catalytic device according to claim 8, wherein the ceria is contained in the OSC layer in a ceria-zirconia composite oxide form.

10. The exhaust gas purification catalytic device according to claim 8 or 9, wherein the OSC layer is included between the substrate and the SCR catalyst layer.

# FIG. 1

# FIG. 2

<table>
<tr><td colspan="2" align="center">**INTERNATIONAL SEARCH REPORT**</td><td colspan="2">International application No.<br>PCT/JP2021/005050</td></tr>
</table>

**A.   CLASSIFICATION OF SUBJECT MATTER**
Int. Cl. B01J29/76(2006.01)i, B01D53/94(2006.01)i, B01J29/46(2006.01)i, F01N3/08(2006.01)i, F01N3/10(2006.01)i, F01N3/28(2006.01)i
FI: B01J29/76 A ZAB, B01J29/46 A, B01D53/94 222, F01N3/08 B, F01N3/10 A, F01N3/28 301P

According to International Patent Classification (IPC) or to both national classification and IPC

**B.   FIELDS SEARCHED**

Minimum documentation searched (classification system followed by classification symbols)
Int. Cl. B01J21/00-38/74, B01D53/94, F01N3/08, F01N3/10, F01N3/28

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2017-514683 A (JOHNSON MATTHEY PLC) 05 June 2017, claims, paragraphs [0020]-[0030], [0039], [0045], [0046], examples 1, 3 | 1-7<br>8, 9<br>10 |
| Y | WO 2012/002052 A1 (N.E. CHEMCAT CORPORATION) 05 January 2012, paragraphs [0025], [0031], [0032], [0048] | 8, 9 |
| A | JP 2016-532548 A (JOHNSON MATTHEY PLC) 20 October 2016, paragraph [0046], fig. 1B | 1-10 |
| A | JP 2018-529039 A (UMICORE AG & CO KG) 04 October 2018, example 1 | 1-10 |

☒   Further documents are listed in the continuation of Box C.          ☒   See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>09.04.2021 | Date of mailing of the international search report<br>20.04.2021 |
|---|---|
| Name and mailing address of the ISA/<br>      Japan Patent Office<br>      3-4-3, Kasumigaseki, Chiyoda-ku,<br>      Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2021/005050

C (Continuation).    DOCUMENTS CONSIDERED TO BE RELEVANT

| Category* | Citation of document, with indication, where appropriate, of the relevant passages | Relevant to claim No. |
|---|---|---|
| P, A | JP 2020-62627 A (TOKYO ROKI KK) 23 April 2020, claims 1, 3, examples, fig. 1 | 1-10 |

Form PCT/ISA/210 (continuation of second sheet) (January 2015)

**INTERNATIONAL SEARCH REPORT**

Information on patent family members

| International application No. |
| --- |
| PCT/JP2021/005050 |

| Patent Documents referred to in the Report | Publication Date | Patent Family | Publication Date |
| --- | --- | --- | --- |
| JP 2017-514683 A | 08.06.2017 | US 2015/0321184 A1 claims, paragraphs [0029]-[0040], [0049], [0055], [0056], example 3 WO 2015/172000 A1 EP 3140038 A1 KR 10-2017-0005455 A CN 106457216 A | |
| WO 2012/002052 A1 | 05.01.2012 | US 2012/0328499 A1 paragraphs [0056]-[0061], [0071]-[0075], [0102]-[0105] EP 2535102 A1 CN 102869431 A | |
| JP 2016-532548 A | 20.10.2016 | WO 2015/017516 A2 p. 14, lines 6-15, fig 1B US 2015/0037233 A1 EP 3027309 A2 KR 10-2016-0038025 A CN 105555403 A | |
| JP 2018-529039 A | 04.10.2018 | WO 2017/005778 A1 examples US 2018/0195428 A1 EP 3320193 A1 CN 107849958 A KR 10-2018-0028505 A | |
| JP 2020-62627 A | 23.04.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010519039 A, Kohyo
- JP 2012507400 A, Kohyo
- JP 2005283129 A, Kokai